# EUROPEAN PATENT APPLICATION

(11) **EP 3 026 263 A1**
(43) Date of publication of application: **01.06.2016**
(21) Application number: 14195479.2
(22) Date of filing: 28.11.2014
(51) Int. Cl.: F03D 13/00, B66D 1/74

(54) **Arrangement to hoist a wind turbine component**

(71) Applicant: Siemens Aktiengesellschaft, 80333 München (DE)
(72) Inventor: Foehns, Kaj, 6971 Spjald (DK); Johansen, Sonni, 8362 Hørning (DK); Svennevig, Carsten, 8200 Århus N (DK); Søe, Jeppe, 8410 Rønde (DK)

(57) **Abstract**

The invention relates to an arrangement and method to hoist up or lower a wind turbine component to or from a nacelle.

An arrangement is disclosed to hoist a component of a wind turbine 10 down from or up to a nacelle 2 of a wind turbine 1. The arrangement comprises a traction system to move a winch cable 6. The traction system comprises a capstan winch 7, located inside the nacelle 2 of the wind turbine 1, to interact with the winch cable 6, and to reduce the force, that is needed to move the component or the wind turbine 10.

## Description

The invention relates to an arrangement and method to hoist up or lower a wind turbine component to or from a nacelle.

A wind turbine comprises a tower, a nacelle that is mounted on top of the tower and a rotor that is attached to the nacelle.

The wind interacts with the rotor and causes a rotation of the rotor. The rotational energy of the rotor is transferred to an electrical generator and is there transformed into electrical energy.

The electrical generator and additional electrical component, like transformer or converter, for example, are often located in the nacelle of the wind turbine.

A wind turbine has a planned lifetime of 20 years and more. During the lifetime of the wind turbine, several components might have to be exchanged due to failures or damages.

In the case of an exchange of a component in the nacelle of the wind turbine, the component has to be lowered to the ground, and an exchange part has to be hoisted up into the nacelle.

This can be done by using a crane. A crane can be an external crane. This shows the disadvantage, that the external crane needs to be shipped to the wind turbine and set up there.

Wind turbines are installed onshore and offshore. The exchange of a transformer at an offshore wind turbine requires a ship with a crane to be shipped to the respective wind turbine. This operation is expensive and requires a long planning time.

It is also known to use an internal crane that is present in the wind turbine. In the case of an exchange of the transformer, the crane has to lift a weight of 12 tons or more. An average crane that is installed in a wind turbine is not capable of lifting such a weight. Thus, a special crane needs to be present in the wind turbine that is capable of lifting the weight of the component to be exchanged.

EP 2520792 B1 describes a hoist system and a method of providing a hoist system for hoisting a wind turbine component up to or down from a nacelle of wind turbine are provided. The nacelle of the wind turbine comprises an opening in the lower part of the nacelle. A winch cable is guided through the nacelle by means of at least one deflection roller and is attached to the wind turbine component. The wind turbine component is lowered or raised through the opening in the nacelle by means of a winch.

A crane, that is capable of lifting a weight of 12 tons or more, is heavy and requires a lot of material to be installed in the wind turbine. Thus, an internal crane of this size is expensive. In addition, it is not needed very often in a single wind turbine. Thus, it is not very efficient to install a crane of this size in every wind turbine.

The aim of the invention is therefore to provide an improved crane solution to lift heavy components to the nacelle of the wind turbine.

The object of the invention is achieved by the independent claims 1 and 10. Further features of the invention are disclosed in the dependant claims.

An arrangement to hoist a component of a wind turbine down from or up to a nacelle of a wind turbine is disclosed. The arrangement comprises a traction system to move a winch cable. The traction system comprises a capstan winch located inside the nacelle of the wind turbine to interact with the winch cable and reduce the force that is needed to move the component of the wind turbine.

The wind turbine comprises a tower, a nacelle that is arranged on top of the tower, and a rotor that is connected to the nacelle.

The nacelle of the wind turbine comprises several components, for example a gearbox, a generator, a transformer, a converter or a control system that might be arranged in an electrical cabinet. During the life time of a wind turbine failures of the components might occur and the components need to be exchanged. For the exchange of the component, the component needs to be lowered down from the nacelle to the ground and an exchange part needs to be hoisted up to the nacelle of the wind turbine.

To exchange the component, the component is connected to a winch cable. The winch cable is moved by a traction system to lower the component or to hoist it up to the nacelle.

Normally, the winch cable is stored on a storage winch and is moved by a motor that is rotating the storage winch to roll up the winch cable on the storage winch. This winch, including the winch cable and the motor, is a big and heavy component that takes up a lot of space in the nacelle and adds a lot of weight to the wind turbine.

The exchange of a component of the wind turbine in the nacelle doesn't occur that often that the traction system and the winch cable need to be present in the wind turbine at all times. On the other hand, the storage winch and the winch cable are that heavy that it is difficult to install them in the nacelle when they are needed.

The traction system according to the application comprises a capstan winch that is located inside the nacelle. The capstan winch interacts with the winch cable in the way that it reduces the force that is needed to move the winch cable. A capstan winch is a winch that doesn't store the winch cable. The winch cable is wrapped around the capstan winch for a number of times, so that the winch cable is moved by the rotation of the capstan winch due to friction between the capstan winch and the winch cable.

During the installation of the hoist arrangement in the nacelle of the wind turbine the capstan winch is independent from the winch cable. The capstan winch is installed inside the nacelle of the wind turbine and the winch cable is wrapped around the capstan winch several times.

The winch cable is then stored otherwise. Thus, the single components of the traction system are more lightweight and easier to handle than the traction system known in the state of the art.

The friction between the capstan winch and the winch cable reduces the force that is needed to handle, rollup, and store the winch cable on the one side of the capstan winch, while hoisting up a component of the wind turbine on the other side of the capstan winch.

The winch cable is then stored on a storage winch that is leading from there to the capstan winch and from the capstan winch to the component of the wind turbine. When the component of the wind turbine is hoisted up to the nacelle, the cable that is wrapped around the capstan winch is moved by the capstan winch and, to a certain lower percentage, also by the storage winch.

Thus, the force needed at a storage winch is reduced by the capstan winch. Thus, the single components of the traction system are smaller and more lightweight and are easier to be installed inside of the nacelle of the wind turbine.

The traction system comprises a storage winch to store the winch cable.

The winch cable is stored on a storage winch for easier handling and transportation.

At nowadays wind turbines the hub height, and therefore also the height of the nacelle above the ground, can be a hundred meters or more. To lower a component from the nacelle down to the ground and to hoist a component up to the nacelle, the winch cable needs to have a length of more than a hundred meters.

Thus, the winch cable is easier to handle when it is stored on the storage winch. The storage winch is moved by a motor to roll the cable from and to the storage winch.

As the force that is needed to roll the cable up on the storage winch is reduced by the capstan winch, the motor of the storage winch can be relatively small compared to the motors of the storage winches in the state of the art.

The nacelle comprises an opening in the lower part of the nacelle and the arrangement is prepared to lower a component of the wind turbine through the opening.

A component of a wind turbine that needs to be replaced is placed above the opening in the lower part of the nacelle.

The winch cable is attached to the component of the wind turbine, and the component can be lowered from the nacelle to the ground through the opening in the lower part of the wind turbine.

Thus, no crane is needed to hoist the component out of the nacelle through a hatch in the roof of the nacelle.

The capstan winch is prepared to be installed above the opening in the lower part of the nacelle.

Thus, the winch cable can be guided from the capstan winch directly to the component that is placed above the opening in the lower part of the nacelle, to be connected to the component.

Thus, no additional installations are needed to guide the cable from the capstan winch to the component of the wind turbine.

The arrangement comprises a safety fence to be installed at the opening in the nacelle for the safety of personal working in the nacelle.

During the exchange of a component in the nacelle of the wind turbine personnel is present in the nacelle to assist during the exchange of the component.

The component is exchanged through an opening in the lower part of the nacelle. To prevent personnel, working in the nacelle, from falling through the opening in the lower part of the nacelle, a safety fence is installed around the opening.

The winch cable is arranged to lead from the capstan winch through a pulley and the winch cable is connected with one end to the nacelle.

The force that is needed to exchange the component and to move the winch cable can even further be reduced by using a pulley and connect the loose end of the winch cable to the nacelle.

Thus, double the length of the winch cable is needed and only half of the force to move the winch cable and to exchange the component in the nacelle.

The arrangement comprises an emergency system to secure the winch cable in case of a failure of the traction system.

A failure might occur in the traction system during the exchange of a component of the nacelle. The arrangement comprises an emergency system to secure the winch cable to the nacelle in the case of a failure of the traction system.

Thus, the component of the traction system can be repaired or exchanged while the winch cable is secured by the emergency system.

The emergency system can for example connect the winch cable to a structural part of the nacelle, like a base frame. Thus, the weight of the component connected to the winch cable is transferred by the emergency system to the base frame of the nacelle.

The emergency system comprises an emergency frame that is connected to the nacelle, and the winch cable is connected to the emergency frame in an emergency situation, whereby the emergency frame is capable to carry the load of the component of the wind turbine.

The emergency system comprises an emergency frame. When a failure in the traction system occurs, the winch cable is fixed to the emergency frame of the emergency system.

Thus, the emergency frame of the emergency system carries the weight of the component connected to the winch cable, until the failure in the traction system is repaired or part of the traction system is replaced.

The arrangement comprises a hydraulic unit to empower the operation of the capstan winch and/or the storage winch.

The capstan winch and/or the storage winch comprise a drive to move the capstan winch and/or the storage winch. This drive is a hydraulic drive.

Thus, the arrangement comprises a hydraulic unit to provide the power for the hydraulic drives.

A method is disclosed to operate an arrangement to hoist the component of a wind turbine down from or up to a nacelle of the wind turbine. The arrangement comprises a traction system to move a winch cable and the traction system comprises a capstan winch to interact with the winch cable and reduce the force that is needed to move the component of the wind turbine. The method comprises the steps of
- installing the arrangement in the nacelle to interact as an arrangement according to the description,
- arranging the winch cable to interact with the capstan winch and
- activating the traction system to move the winch cable.

The arrangement to hoist the component of a wind turbine is installed in the nacelle. The arrangement comprises a winch cable, and the winch cable is arranged to interact with the capstan winch. The traction system of the arrangement comprises the capstan winch and the traction system is activated to move the winch cable.

Thus, an arrangement is provided to hoist the component of a wind turbine. Thus, a component of a wind turbine, present in the nacelle of the wind turbine, can be lowered down from the nacelle to the ground or can be hoisted up from the ground to the nacelle to be replaced.

In a preferred embodiment, the arrangement consists of a plurality of parts that are prepared to be installed inside a nacelle of a wind turbine independently from each other and that are prepared to interact as an arrangement described. The method comprises the additional steps of hoisting the parts of the arrangement up into a nacelle of a wind turbine by an internal crane present in the nacelle and connecting the parts of the arrangement to the nacelle.

The arrangement to hoist the component in the nacelle of a wind turbine consists of several parts that can be transported and installed independently from each other. The independent parts are small and lightweight and can be hoisted up into the nacelle of the wind turbine by an internal crane present in the nacelle.

The components of the hoist system are then installed inside the nacelle and are connected by the winch cable.

After the installation of the hoist arrangement in the nacelle of the wind turbine a component of a wind turbine can be hoisted up to the nacelle of the wind turbine or can be lowered from the nacelle to the ground.

Preferably the method comprises the additional steps of
- connecting the winch cable to a component of the wind turbine, and
- detaching the component from the nacelle of the wind turbine.

In a preferred embodiment the arrangement comprises a support wheel that is attached to the component of the wind turbine. Preferably the method comprises the additional steps of supporting the component of the wind turbine alongside the tower of the wind turbine via the support wheel.

During the exchange of a component of the nacelle of the wind turbine, that is lowered from the nacelle to the ground being attached to a winch cable, or is hoisted up to the nacelle of the wind turbine, wind might interact with the component of the wind turbine. This might lead to an unpredicted movement of the component in relation to the wind turbine.

Thus, the component of the wind turbine that is attached to the winch cable might interfere with the tower of the wind turbine.

To avoid an unpredicted movement of the component during the hoisting, the hoist arrangement comprises a support wheel. The support wheel is attached to the component in a way that a component can roll along the outside wall of the tower using the support wheel.

Thus, the component is pulled up to the nacelle or lowered from the nacelle alongside the tower, and an unpredicted movement of the component in relation to the tower is prevented.

Thus, a damage of the tower or the component due to an unpredicted movement of the component due to wind is prevented.

The invention is shown in more detail by the help of figures. The figures show a preferred configuration and do not limit the scope of the invention.
- Figure 1: shows a hoist arrangement.
- Figure 2: shows a hoist arrangement as it is arranged in the nacelle of a wind turbine.
- Figure 3: shows a detailed embodiment of the hoist arrangement.
- Figure 4: shows a hoist arrangement of the wind turbine with a component of a wind turbine connected to the hoist arrangement.

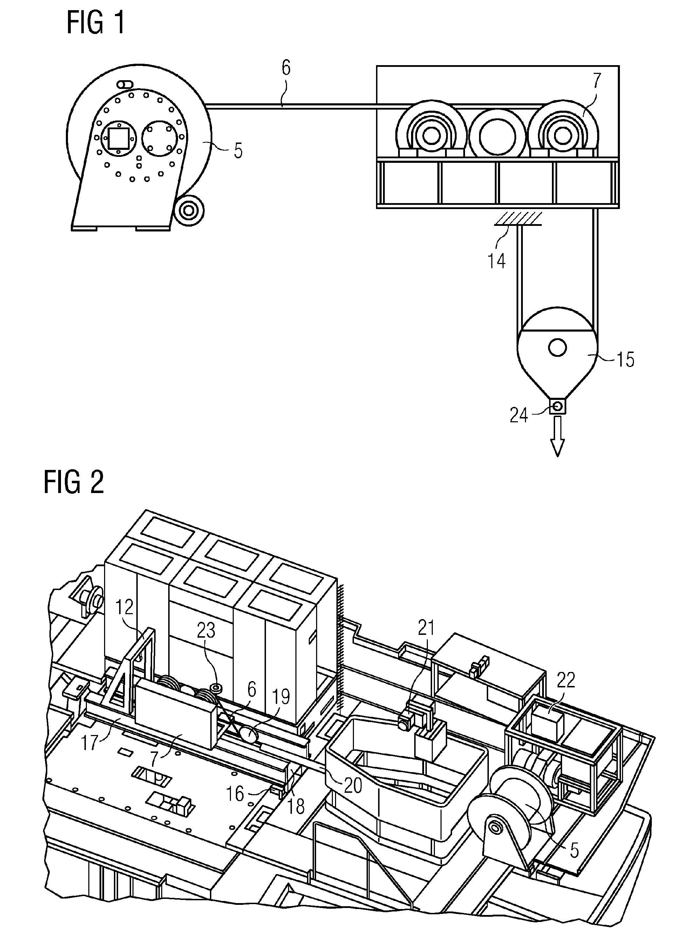

Figure 1 shows a hoist arrangement.

Figure 1 shows an arrangement to hoist a wind turbine component down from or up to a nacelle of a wind turbine. The hoist arrangement comprises a storage winch 5 to store the winch cable 6.

In addition, the hoist arrangement comprises a capstan winch 7 to reduce the force that is needed to hoist a component of a wind turbine.

The winch cable 6 is stored on the storage winch 5. The winch cable 6 is guided over the capstan winch 7 to a roller 15. The roller 15 comprises a hook to connect a component of a wind turbine to the hoist arrangement. At its end, the winch cable 5 is connected to a support structure of the nacelle of the wind turbine.

The hoist arrangement consists of several independent parts that can be arranged in the nacelle of a wind turbine. The independent parts of the hoist arrangement can be hoisted up into the nacelle of the wind turbine separately and independently.

Thus, the hoist arrangement can be installed in the wind turbine using the internal crane of the nacelle of the wind turbine. The parts of the hoist arrangement are then arranged within the nacelle of the wind turbine and connected to the support structure of the wind turbine.

The winch cable 6, that is stored on the storage winch 5, is guided over the capstan winch 7 through the roller 15 and is connected at its loose end to the support structure of the wind turbine.

After the winch cable 6 is installed in the hoist arrangement, the hoist arrangement can be used to hoist a component of a wind turbine up to the nacelle or to lower a component of a wind turbine down from the nacelle to the ground.

Figure 2 shows a hoist arrangement as it is arranged in the nacelle of a wind turbine.

The hoist arrangement comprises a storage winch 5 where the winch cable 6 is stored. A capstan winch 7 and an emergency frame 12 are arranged above an opening in the lower part of the nacelle of the wind turbine.

The winch cable 6 is guided from the storage winch 5 to the capstan winch 7 through a rope tube 20 and is deflected at a cable wheel 19.

In the case of a failure of the capstan winch 7 or the storage winch 5, the winch cable 6 can be connected to the emergency frame 12 to support the weight of the component of the wind turbine that is connected to the winch cable 6.

The capstan winch 7 comprises an emergency brake 23 to break the movement of the cable in the case of a failure in the system.

The emergency frame 12 and the capstan winch 7 are connected to a support bar 17. The support bar 17 is connected by a foot 18 to the support structure 16 of the nacelle of the wind turbine.

The traction system of the hoist arrangement is run by a hydraulic unit 22.

The nacelle of the wind turbine comprises an internal crane 21 that is capable of hoisting the individual parts of the hoist arrangement up into the nacelle. There, the individual parts of the hoist arrangement are connected to the support structure of the nacelle and are connected by the winch cable 6.

After the installation of the individual parts of the hoist arrangement within the nacelle of the wind turbine, the hoist arrangement can be operated.

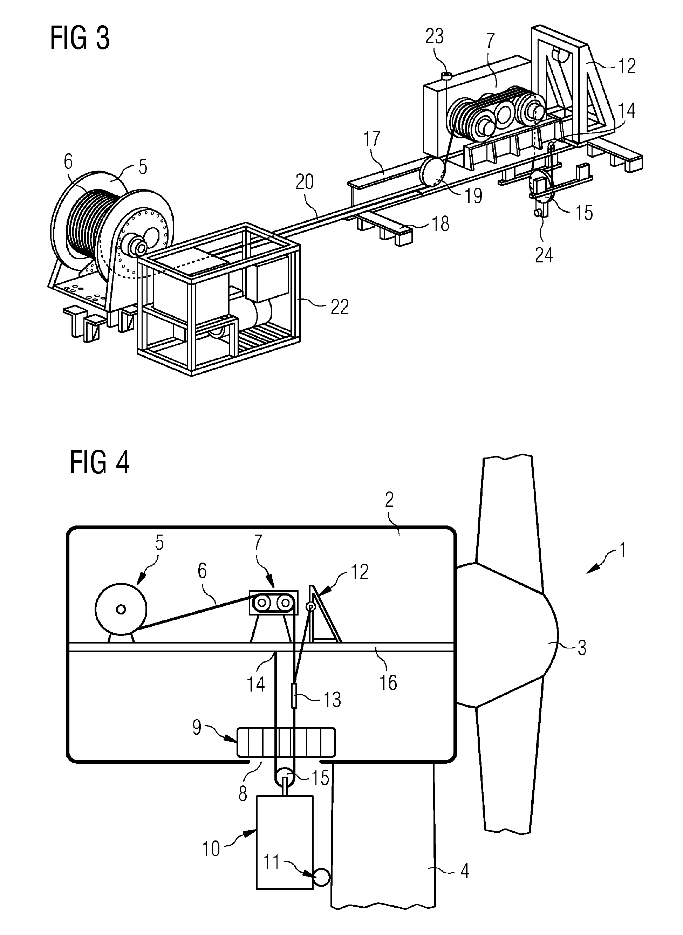

Figure 3 shows a detailed embodiment of the hoist arrangement.

Figure 3 shows an embodiment of the hoist arrangement as it is arranged in the nacelle of a wind turbine. The winch cable 6 is stored on a storage winch 5. The winch cable 6 leads through a rope tube 20 to a cable wheel 19 where the winch cable 6 is deflected.

The winch cable 6 leads to a capstan winch 7. From the capstan winch 7, the winch cable 6 leads down towards a roller 15. The roller 15 comprises a hook 24 to connect a component of the wind turbine to the hoist arrangement. From the roller 15, the winch cable 6 leads to a connection point 14 where the cable 6 is connected to the support structure of the wind turbine.

The hoist arrangement comprises an emergency frame 12 to connect the winch cable 6 to the emergency frame in the case of a failure of the hoist arrangement. The capstan winch 7 and the emergency frame 12 are connected to a support bar 17. The support bar 17 is connected to a foot 18 that is then connected to the support structure of the wind turbine.

The hoist arrangement comprises a hydraulic unit 22 to run the storage winch 5 and the capstan winch 7.

The rope tube 20 is divided into an upper half and the lower half that can be opened so that the winch cable 6 can be laid into the lower half of the rope tube 20. The rope tube 20 is then closed so that the winch cable 6 is protected.

Figure 4 shows a hoist arrangement of the wind turbine with a component of a wind turbine connected to the hoist arrangement.

The wind turbine 1 comprises a nacelle 2. A rotor 3 is connected to the nacelle 2 of the wind turbine 1. The nacelle 2 is arranged on top of a tower 4.

The hoist arrangement in the nacelle of the wind turbine comprises a storage winch 5. The winch cable 6 is stored on the storage winch 5 and leads from the storage winch 5 to the capstan winch 7.

From there, the winch cable 6 leads downward towards a roller 15. The roller 15 comprises a hook to connect a component of a wind turbine 10 to the winch cable 6.

From the roller 15, the winch cable 6 leads up to a connection point 14 where the winch cable 6 is connected to the support structure of the nacelle 2.

A component of a wind turbine 10 is lowered from the nacelle 2 through an opening 8 in the lower part of the nacelle. The opening 8 in the lower part of the nacelle is protected by a fence 9.

The fence 9 is installed around the opening 8 and a bottom part of the nacelle to protect personnel that is working inside of the nacelle from falling through the opening 8 of the nacelle 2.

The component 10 of the wind turbine comprises rollers 11 that abut on the tower 4. Thus, the component 10 rolls along the wall of the tower 4 using the rollers 11, when the component 10 is lowered from the nacelle towards the ground.

Thus, the component 10 experiences less influence of the wind during its way downwards. An exchange part for the component 10 can be hoisted up into the nacelle in a same way as the component 10 was lowered down to the ground.

The exchange part is connected to the hook at the roller 15 and the wheels 11 of the exchange part abut on the wall of the tower 4.

The winch cable 6 is then pulled up by the capstan winch 7 and stored on the storage winch 5. Thus, the exchange part is hoisted up along the tower 4 and through the opening 8 into the nacelle 2 of the wind turbine 1.

The opening 8 in the nacelle 2 of the wind turbine 1 is then closed and the safety fence 9 is removed.

The components of the hoist arrangement are installed upon a support structure 16 within the nacelle 2 of the wind turbine 1.

In the case of a failure of the capstan winch 7 or the storage winch 5, the winch cable 6 can be connected by a clamp 13 to the emergency frame 12. Thus, the weight of the component 10 is connected to the emergency frame 12 and the capstan winch 7 or the storage winch 5 can be repaired or exchanged.

The illustration in the drawings is in schematic form. It is noted that in different figures, similar or identical elements are provided with the same reference signs.

Although the present invention has been described in detail with reference to the preferred embodiment, it is to be understood that the present invention is not limited by the disclosed examples, and that numerous additional modifications and variations could be made thereto by a person skilled in the art without departing from the scope of the invention.

It should be noted that the use of "a" or "an" throughout this application does not exclude a plurality, and "comprising" does not exclude other steps or elements. Also elements described in association with different embodiments may be combined. It should also be noted that reference signs in the claims should not be construed as limiting the scope of the claims.

## Claims

1. Arrangement to hoist a component of a wind turbine (10) down from or up to a nacelle (2) of a wind turbine (1),
- whereby the arrangement comprises a traction system to move a winch cable (6),
**characterized in that** the traction system comprises a capstan winch (7), located inside the nacelle (2) of the wind turbine (1), to interact with the winch cable (6), and to reduce the force, that is needed to move the component of the wind turbine (10).

2. Arrangement according to claim 1, **characterized in that** the traction system comprises a storage winch (5), to store the winch cable (6).

3. Arrangement according to claim 1, **characterized in that** the nacelle (2) comprises an opening (8) in the lower part of the nacelle (2), and that the arrangement is prepared to lower a component of a wind turbine (10) through the opening (8).

4. Arrangement according to claim 3, **characterized in that** the capstan winch (7) is prepared to be installed above the opening (8) in the lower part of the nacelle (2).

5. Arrangement according to claim 4, **characterized in that** the arrangement comprises a safety fence (9) to be installed at the opening (8) in the nacelle (2), for the safety of personnel working in the nacelle (2).

6. Arrangement according to claim 3, **characterized in that** the winch cable (6) is arranged to lead from the capstan winch (7) through a pulley (15), and that the winch cable (6) is connected with one end to the nacelle (2).

7. Arrangement according to one of the preceding claims, **characterized in that** the arrangement comprises an emergency system, to secure the winch cable (6) in case of a failure of the traction system.

8. Arrangement according to one of the preceding claims, **characterized in that** the emergency system comprises an emergency frame (12) that is connected to the nacelle (2), and that winch cable (6) is connected to the emergency frame (12) in an emergency situation, whereby the emergency frame (12) is capable to carry the load of the component of the wind turbine (10).

9. Arrangement according to one of the preceding claims, **characterized in that** the arrangement comprises a hydraulic unit (22), to empower the operation of the capstan winch (7) and/or the storage winch (5).

10. Method to operate an arrangement to hoist a component of a wind turbine (10) down from or up to a nacelle (2) of a wind turbine (1),
- whereby the arrangement comprises a traction system to move a winch cable (6),
- whereby the traction system comprises a capstan winch (7) to interact with the winch cable (5), and to reduce the force, that is needed to move the component of the wind turbine (10),
Comprising the steps of
- installing the arrangement in the nacelle (2) to interact as an arrangement according to one of the claims 1 to 9,
- arranging a winch cable (6) to interact with the capstan winch (7),
- activating the traction system to move the winch cable (6).

11. Method according to claim 10,
- whereby the arrangement consists of a plurality of parts, that are prepared to be installed inside a nacelle (2) of a wind turbine (1) independently from each other, and that are prepared to interact as an arrangement according to one of the claims 1 to 9, comprising the additional steps of
- hoisting the parts of the arrangement up into a nacelle (2) of a wind turbine (1) by an internal crane (21) present in the nacelle (1),
- connecting the parts of the arrangement to the nacelle (1).

12. Method according to claim 10 or 11,
comprising the steps of
- connecting the winch cable (6) to a component of a wind turbine (10),
- detaching the component (10) from the wind turbine and
- lowering the component (10) from the nacelle (2) of the wind turbine (1).

13. Method according to claim 12,
- whereby a support wheel (11) is attached to the component of the wind turbine (10),
comprising the step of
- supporting the component of the wind turbine (10) alongside the tower (4) of the wind turbine (1) via the support wheel (11).
